# EUROPEAN PATENT APPLICATION

(11) **EP 3 324 640 A1**
(43) Date of publication of application: **23.05.2018**
(21) Application number: 16306496.7
(22) Date of filing: 16.11.2016
(51) Int. Cl.: H04N 21/426, H04N 21/43, H04N 21/4623

(54) **METHOD FOR DESCRAMBLING MULTIMEDIA DATA IN A RECEIVER AND CORRESPONDING DEVICE**

(71) Applicant: Thomson Licensing, 92130 Issy-les-Moulineaux (FR)
(72) Inventor: QUERE, Thierry, 35576 Cesson-Sévigné Cedex (FR); BOURGEON, Olivier, 35576 Cesson-Sévigné Cedex (FR); RIGAL, Renaud, 35576 Cesson-Sévigné Cedex (FR)
(74) Representative: Huchet, Anne

(57) **Abstract**

Flooding audio/video descramblers with scrambled elementary data is avoided when the control access module did not yet have the time to decipher the descrambling keys required for the descrambling. Elementary stream data belonging to the current key period are temporary stored (cached) in a memory if the control access module is not ready to receive new descrambling keys to decipher and injection is postponed to the moment when the control access module is ready and if the cached data still belongs to the current key period. This way, it is ensured that every allowed program elementary stream data are descrambled.

## Description

### FIELD

The present disclosure generally relates to the field of descrambling multimedia data in a digital receiver device, and in particular to improvement of the same.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Encryption is a process of data obfuscation with a key. Audio/video/data (multimedia) streams are often provided to receivers in encrypted form. The encryption serves as a protection of transmitted content. Although strictly speaking incorrect, this encryption is referred to by digital television engineers as "scrambling" for historical reasons; an encryption/decryption key is commonly referred to as the (de)scrambling key and also as the Control Word (CW). In the following, the term "scrambling" and "descrambling" will be used meaning "encrypting" respectively "decryption" ciphered data.

At the transmitter side, the scrambling of a multimedia stream is done with a Control Word that changes generally every 10s to strengthen the protection. The duration of validity of a given Control Word is commonly referred to as crypto period. The services of a Control Access (CA) system are used to scramble Control Words to create what is commonly referred to as scrambled Control Words. The transmitter encrypts the multimedia stream with the changing Control Word and transmits or broadcasts a scrambled multimedia stream with the scrambled Control Words to a set of multimedia receiver devices. The encrypted Control Words are included in data sections that are referred to as ECMs for Entitlement Control Messages. The transmitter transmits the Control Word of the current crypto period and the Control Word of the upcoming (next) crypto period. These are referred to as odd and even keys. Signalization included in the transmission, (e.g. according to the Digital Video Broadcasting "scrambling control bits"), indicates which key should be used for descrambling the data of the current crypto period and which key should be used for descrambling the data of the next crypto period (i.e., odd or even keys). The odd key is transmitted in a signalization table having an odd number (e.g., 0x81) and the even key is transmitted in a signalization table having an even number (e.g., 0X80). The receiver can prepare the next crypto period by having its CA module descramble the control word of the upcoming crypto period. Further at the receiver side, the scrambled multimedia stream is descrambled by a decryption function commonly referred to as a descrambler. The receiver includes a CA module that enables descrambling the scrambled control words included in the received ECMs. The CA module is designed to operate at a "normal" Control Word change frequency (e.g., every 10s). However, in some cases such as play-from-file (e.g., starting to play a video from a Personal Video Recording) ECMs are provided in burst mode to the CA module. In other cases such as live broadcast, ECM changes may occur that are too frequent for the CA module, e.g. when frequent changes occur from non-scrambled data to scrambled data and vice versa. When channel surfing is operated over channels that are scrambled, the channel surfing will cause frequent ECM changes. Too frequent ECM changes may result in overflow of the CA module. Multichannel reception may also result in many ECMs being transmitted to the CA module in a very short time. When the CA module overflows data are lost. The data loss causes visible/audible artefacts such as audio/video glitches or play out interruption.

There is thus a need for optimization of the processing of encrypted (scrambled) multimedia data in a receiver.

### SUMMARY

According to one aspect of the present disclosure, a method for descrambling scrambled data from a data stream is provided. The method is implemented by a data stream receiver device and includes receiving scrambled program elementary stream data from the data stream and receiving descrambling keys from the data stream; obtaining, from information included in the received data stream, a first parity of a descrambling key with which the received scrambled elementary stream data are scrambled; comparing the first parity to a second parity of a descrambling key for descrambling previously received scrambled program elementary stream data; if the first parity is different from the second parity, clearing a memory for temporary storage of the previously received scrambled program elementary stream data, and initializing the second parity to the first parity; obtaining a status from a control access module; if the status indicates that the control access module is busy, storing the received scrambled elementary stream data in the memory and injecting, in the control access module, the received descrambling keys; if the status indicates that the control access module is ready, injecting, into a program elementary stream descrambler any scrambled elementary data stored in the memory and injecting into the program elementary stream descrambler the received scrambled elementary data, and injecting into the control access module the received descrambling keys.

According to a particular embodiment of the method the receiving scrambled program elementary stream data from the data stream and the receiving descrambling keys from the data stream includes adding a wait cycle that depends on a frequency of repetition of packets in the data stream including a Program Clock Reference.

According to a particular embodiment of the method the wait cycle is set to a duration of at least an interval between occurrence of packets in the data stream including program clock references when a change of descrambling key period is detected, and wherein the wait cycle is reset to a zero value when the status indicates that the control access module is ready.

According to a particular embodiment of the method the duration is a multiple of the interval between occurrences of packets in the data stream including program clock references.

According to one aspect of the present disclosure, a receiver device for receiving data from a data stream is provided. the receiver device includes a processor, a network interface and a memory configured to receive scrambled program elementary stream data from the data stream and receiving descrambling keys from the data stream; configured to obtain, from information included in the received data stream, a first parity of a descrambling key with which the received scrambled program elementary stream data are scrambled; configured to compare the first parity to a second parity of a descrambling key for descrambling previously received scrambled program elementary stream data; and if the first parity is different from the second parity, clear a memory for temporary storage of the previously received scrambled program elementary stream data, and initialize the second parity to the first parity; configured to obtain a status from a control access module; and if the status indicates that the control access module is busy, store the received scrambled program elementary stream data in the memory and inject, in the control access module, the received descrambling keys; and if the status indicates that the control access module is ready, inject, into a program elementary stream descrambler any scrambled elementary data stored in the memory and inject into the program elementary stream descrambler the received scrambled elementary data, and inject into the control access module the received descrambling keys.

According to a particular embodiment of the device the processor is further configured to add a wait cycle when between the receiving of scrambled program elementary stream data from the data stream and the receiving descrambling keys from the data stream, the wait cycle that depends on a frequency of repetition of packets in the data stream including a Program Clock Reference.

According to a particular embodiment of the device the processor is further configured to set the wait cycle to a duration of at least an interval between occurrence of packets in the data stream including program clock references when a change of descrambling key period is detected, and to set the wait cycle is reset to a zero value when the status indicates that the control access module is ready.

According to a particular embodiment of the device the processor is further configured to set the duration to a multiple of the interval between occurrences of packets in the data stream including program clock references.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following drawings in which:
**Figure 1** is an exemplary prior art multimedia receiver capable of descrambling scrambled multimedia streams.
**Figure 2** is an exemplary embodiment of a multimedia receiver device **20** according to the present principles.
**Figure 3** is an exemplary descrambling method according to the present principles.
**Figure 4** is a different embodiment of a descrambling method according to the present principles.
**Figure 5** is a further embodiment of a device for descrambling multimedia data from a data stream according to the present principles.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

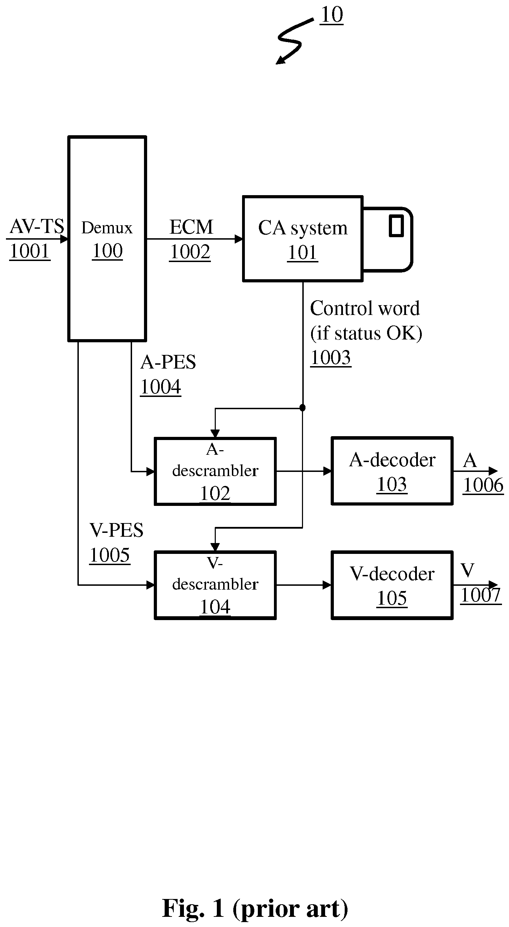

**Figure 1** is an exemplary prior art multimedia receiver **10** capable of descrambling scrambled multimedia streams. Multimedia receiver **10** receives from a Front End (e.g. tuner or network interface; not shown) a multiplexed data stream **1001** including audio and video program elementary streams (PES), sections including ECM and various signalization tables. The signalization tables inform the receiver of the contents of the multiplexed data stream, such as PIDs (Program Identifiers) of elementary audio and video streams included in the multiplexed data stream. A controller or central processing unit (CPU; not shown) programs a demultiplexer **100** to filter ECMs **1002,** scrambled audio PES **1004** and scrambled video PES **1005.** ECMs **1002** including ciphered control words are fed to a CA system **101** for deciphering. The CA system **101** possibly includes a smart card. An audio descrambler **102** receives the scrambled audio program elementary stream A-PES **1004** from the demux **100,** and additionally receives the deciphered control word **1003** valid for the current crypto period and the deciphered control word for the next crypto period. The descrambler uses the deciphered control words to descramble the scrambled audio elementary stream and feeds the descrambled audio elementary stream to audio decoder **103.** Audio decoder decodes the descrambled audio elementary stream and provides it to an audio/video driver (A, **1006**) such as according to the HDMI for High Definition Multimedia Interface (not shown). The same goes for the scrambled video program elementary stream V-PES **1005,** which is descrambled by a video descrambler **104** and decoded by a video decoder **1007,** which outputs decoded video (V-**1007**) to the previously mentioned audio/video driver. The output of the audio and video decoders **103** respectively **105** is triggered by an internal System Time Clock (STC, not shown) which is synchronized with the encoder clock used by the transmitter e.g., using PCR (Program Clock Reference) timestamps included in the multiplexed data stream.

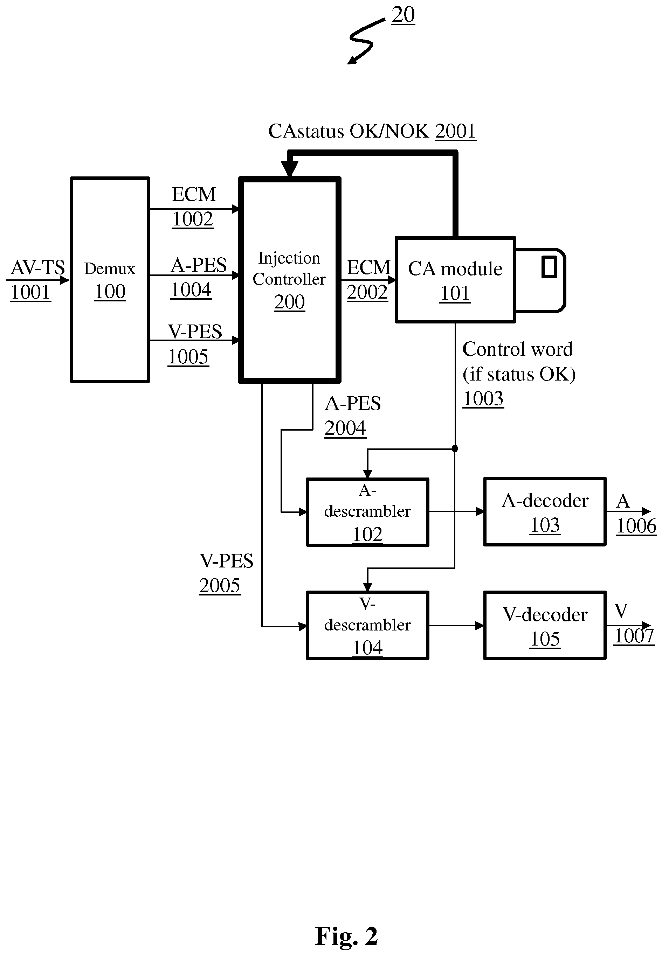

**Figure 2** is an exemplary embodiment of a multimedia receiver device **20** according to the present principles. Compared to the prior art multimedia receiver device **10** of figure **1****,** the multimedia receiver device **20** includes an injection controller **200.** Injection controller **200** receives a status CA status OK/NOK **2001** of the CA system **101.** The functioning of injection controller **200** will become clear with the aid of the following figures.

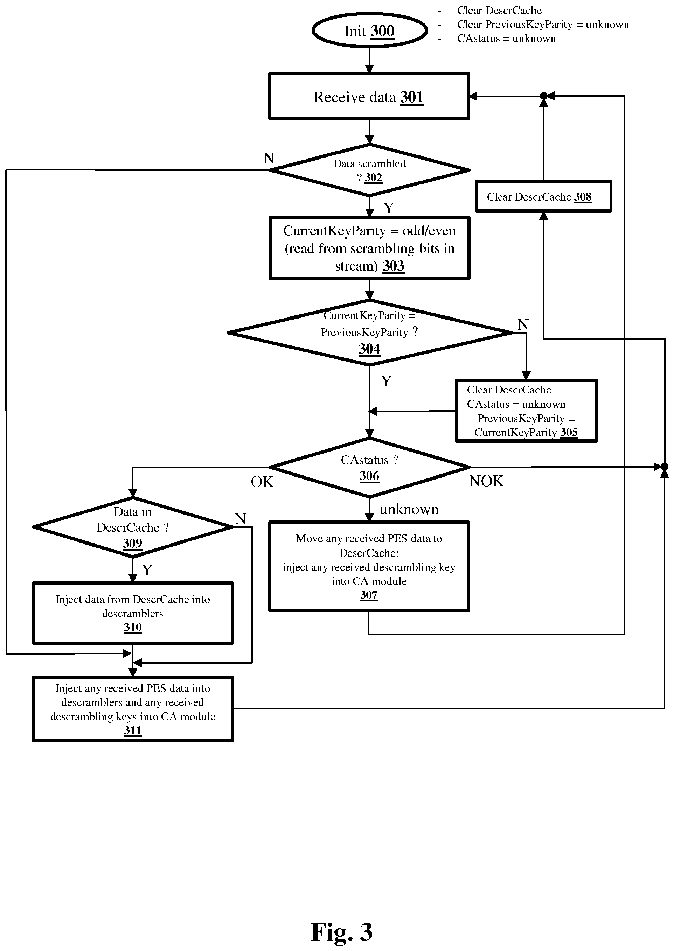

**Figure 3** is an exemplary descrambling method according to the present principles. The exemplary descrambling method starts with an initialization step **300,** in which memory, statuses, flags and other parameters used during the method are initialized. For example, the memory "DescrCache" (descrambling cache) and status "PreviousKeyParity" are cleared in this step. The descrambling cache memory is used for temporary storage of PES data (e.g., audio and/or video elementary stream data) awaiting descrambling by the audio and video descramblers **102** and**104.** The status "PreviousKeyParity" contains the parity of the last read and memorized descrambling period and is set to "unknown" in this step. Status "CAstatus" is updated by the CA module **101,** and corresponds to "OK" if access is granted, "NOK" if access is refused. It is initialized to "unknown" in step **300.** This can happen, for example, when the CA module **101** cannot decipher an ECM because of insufficient data rights. If the CAstatus is "unknown", the CAstatus cannot be obtained. This occurs, for example, when the CA module **101** is busy with the ECM deciphering processing. The CA statuses "OK" or "NOK" by contrast indicate that the CA module **101** has had the time to update the status, i.e. it is considered to be in a state 'ready'. In step **301,** multimedia data are received from a stream **1001.** In a step **302,** it is verified if the data received in step **301** are scrambled or not.

If the received data are not scrambled, it is verified in a step **309** if data are stored in the descrambling cache. If descrambling cache includes PES data, the PES data stored in this memory are injected in the audio/video descramblers in step **310.** In step **311,** the PES data received in step **301** are injected in the audio/video descramblers. The audio/video descramblers will pass this non-scrambled data "as is" to the audio/video decoders. In step **308,** descrambling cache is cleared and the method returns to data receiving step **301.**

If, however, it is determined in step **302** that the PES data received in step **301** are scrambled, step **303** is engaged, in which the parity of the key required for descrambling the data received in step **301** is determined from the scrambling bits in the data stream. In step **304,** this parity is compared to the parity stored in PreviousKeyParity. If the two parities are different, there is a change of key. If there is a change of key, the descrambling cache is cleared, CAstatus is set to "unknown", and PreviousKeyParity is set to the value of CurrentKeyParity in step **305.**

Then, in step 306, CAstatus is read. If the CA module has updated CAstatus, the status will have been set to either "OK" or "NOK". If the CAstatus was not updated by the CA module, CAstatus has the value "unknown". If CAstatus is "unknown", the PES data received in step 301 are moved (stored) in step 307 in descrambling cache and are, thus, not directly injected into the descrambling module. Any descrambling keys received in step 301 are however injected in step 307 into the CA module (as an ECM section or extracted from the ECM section). Then, the method returns to step 301 of data reception.

If CAstatus as determined in step 306 is "OK", step 309 is engaged, which has been described previously.

If CAstatus as determined in step **306** is "NOK", step **308** is engaged. In step **308,** descrambling cache is cleared and the method returns to step **301** of data reception.

Thus, according to the present principles, it is avoided to flood the descramblers with scrambled elementary data when the control access module did not yet have the time to decipher the descrambling keys required for the descrambling. According to the present principles the elementary stream data belonging to the current key period are temporary stored in a memory if the control access module is not ready to receive new descrambling keys to decipher (steps **301-302-303-304-306-307**), to be injected later when the control access module is ready and if the cached data still belongs to the current key period (steps **302-303-304-306-309-310**). This way, it is ensured that every allowed program elementary stream data are descrambled.

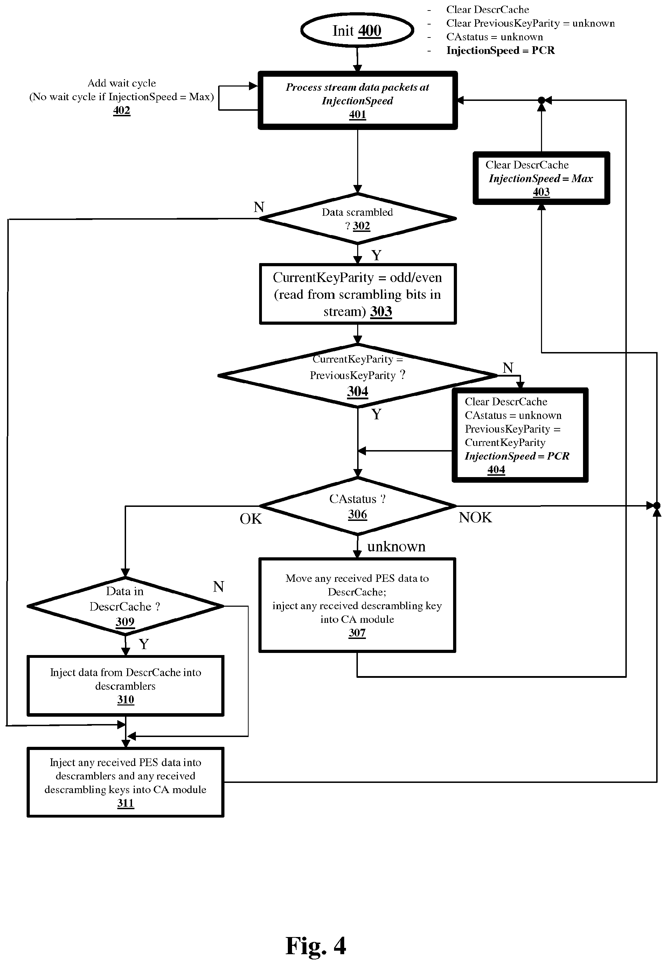

**Figure 4** is a different embodiment of a descrambling method according to the present principles. According to this embodiment, the descrambling method is further optimized through introduction of variable injection speed. The injection speed can have two values, "PCR" or "max". An injection speed of "PCR" corresponds to an injection speed that is determined by the PCR (Program Clock Reference) values in the received data stream. For example, a PCR is received each 35ms. This is an injection speed that allows the injection speed to remain the same rhythm with which data is provided as if received from a live stream. An injection speed of "Max" corresponds to an injection speed that is independent of PCR and that is, in practice, limited by hardware. Injection speed "PCR" is the injection speed the CA module is generally designed for and corresponds to an injection speed for which the CA module functions optimally.

In an initialization step **400,** a variable InjectionSpeed is set to "PCR". The number of packets (A-PES 1004, V-PES 1005 and ECM 1002) from the data stream to descramble is based on PCR reception frequency in the AV-TS 1001 a step **401.** If the InjectionSpeed is "PCR", the processing of packets from the data stream is scheduled by the PCRs in the data stream and one or more wait cycles may be added **402** before continuing to processing a next packet. For example, if the delay between PCR (PCR interval) is 35ms, the wait cycle is set to 35ms in step **401** and after expiration of the wait cycle an equivalent of 35ms of packets is read from the data stream. Higher values of wait cycles can be used to further slow down the injection speed (e.g., to a multiple of an interval of occurrence of packets in the data stream comprising PCR, e.g., 70ms or 105ms) while taking care to not exceed the "normal" data arrival rate, i.e. in principle, the lower limit of a wait cycle value is given by the PCR interval (e.g., 35ms). If the InjectionSpeed is "max", no wait cycles are added in step **401** (i.e. the wait cycle has a zero value). The InjectionSpeed is set to "PCR" upon initialization of the process loop in step **400** and upon detection of a change of descrambling key period in step **404.** The InjectionSpeed is set to "max" in step **403** when data received are not scrambled; when the received data are scrambled but there is no change of descrambling period and the CAstatus is "OK"; when the received data are scrambled CAstatus is "NOK".

This embodiment advantageously enables further optimization the descrambling method depicted in figure 3 because the injection rhythm is better adapted to changes of key period. During a change of key period, the injection speed is slowed down to be timed by PCR. A change to max speed (i.e. wait cycle is reduced (reset) to a zero value) will not be operated until the status of the CA module is known (status "OK" or "NOK"; i.e. status indicating that the CA module is ready). This embodiment is particularly adapted to injection of data from a PVR or more generally in burst injection mode. According to this embodiment, the receiving scrambled elementary stream data from the data stream and the receiving descrambling keys from the data stream includes adding of a wait cycle **402** that depends on the frequency of repetition of packets in the data stream that include a Program Clock Reference.

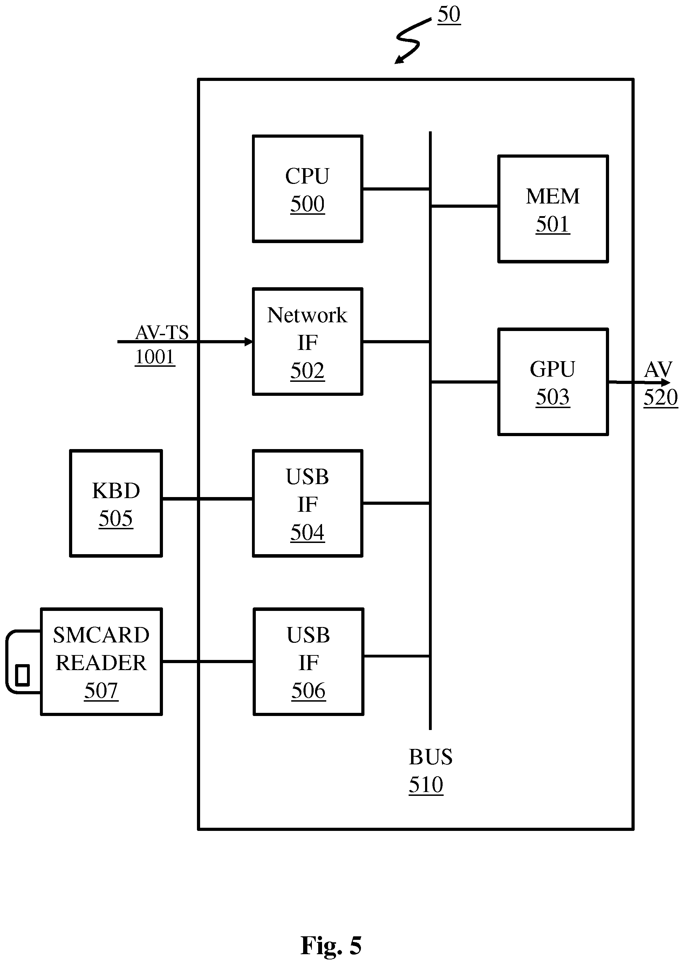

**Figure 5** is a further embodiment of a device for descrambling multimedia data from a data stream according to the present principles.

The exemplary device **50** includes internal elements CPU or central processing unit **500,** memory **501,** network interface **502,** GPU or graphic processing unit **503,** first USB interface **504,** second USB interface **506,** and internal data communication bus **510** that interconnects the different internal elements of the device **50.** The device **50** receives a multiplexed transport stream AV-TS **1001** via its network interface **502,** user input from a keyboard **505** connected to USB interface **504,** and information from a smart card reader **507** connected to USB interface **506.** The device outputs digital audio and video on AV output **520** connected to GPU **503.** Device **50** is suitable to implement the different descrambling methods described. For example, memory **501** stores the statuses, flags, cache memory and other parameters described with reference to figures 3 and 4. A demultiplexer, CA module, injection controller, audio/video descramblers and audio/video decoders are implemented as computer readable instructions that are stored in memory **501** and which are executed by CPU **500.** The CPU **501** reads information from smart card reader **507** via its USB interface **506.** Data for display is handled by GPU **503,** which outputs the digital AV information on output **520.**

It is to be appreciated that some elements in the drawings may not be used or be necessary in all embodiments. Some operations may be executed in parallel. Variant embodiments other than those illustrated and/or described are possible. For example, a device implementing the present principles may include a mix of hard- and software.

It is to be appreciated that aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for descrambling scrambled data from a data stream (1001), said method being implemented by a data stream receiver device (20,50), the method comprising:
receiving (301) scrambled program elementary stream data from said data stream and receiving descrambling keys from said data stream;
obtaining, from information included in said received data stream, a first parity of a descrambling key with which said received scrambled elementary stream data are scrambled;
comparing (304) said first parity to a second parity of a descrambling key for descrambling previously received scrambled program elementary stream data;
if said first parity is different from said second parity, clearing (305) a memory for temporary storage of said previously received scrambled program elementary stream data, and initializing said second parity to said first parity;
obtaining (306) a status from a control access module;
if said status indicates that said control access module is busy, storing (307) said received scrambled elementary stream data in said memory and injecting, in said control access module, said received descrambling keys;
if said status indicates that said control access module is ready, injecting (310), into a program elementary stream descrambler any scrambled elementary data stored in said memory and injecting into said program elementary stream descrambler said received scrambled elementary data, and injecting into said control access module said received descrambling keys.

2. The method according to claim 1, wherein said receiving scrambled program elementary stream data from said data stream and said receiving descrambling keys from said data stream comprises adding a wait cycle that depends on a frequency of repetition of packets in said data stream comprising a Program Clock Reference.

3. The method according to claim 2, wherein the wait cycle is set to a duration of at least an interval between occurrence of packets in said data stream comprising program clock references when a change of descrambling key period is detected, and wherein the wait cycle is reset to a zero value when said status indicates that said control access module is ready.

4. The method according to any of claim 3, wherein said duration is a multiple of said interval between occurrences of packets in said data stream comprising program clock references.

5. A receiver device (20, 50) for receiving data from a data stream (1001), wherein said receiver device comprises a processor (500), a network interface (502) and a memory (501) configured to:
receive scrambled program elementary stream data from said data stream and receiving descrambling keys from said data stream;
obtain, from information comprised in said received data stream, a first parity of a descrambling key with which said received scrambled program elementary stream data are scrambled;
compare said first parity to a second parity of a descrambling key for descrambling previously received scrambled program elementary stream data;
if said first parity is different from said second parity, clear a memory for temporary storage of said previously received scrambled program elementary stream data, and initialize said second parity to said first parity;
obtain a status from a control access module;
if said status indicates that said control access module is busy, store said received scrambled program elementary stream data in said memory and inject, in said control access module, said received descrambling keys;
if said status indicates that said control access module is ready, inject, into a program elementary stream descrambler any scrambled elementary data stored in said memory and inject into said program elementary stream descrambler said received scrambled elementary data, and inject into said control access module said received descrambling keys.

6. The device according to claim 5, wherein said processor is further configured to add a wait cycle when between said receiving of scrambled program elementary stream data from said data stream and said receiving descrambling keys from said data stream, said wait cycle that depends on a frequency of repetition of packets in said data stream comprising a Program Clock Reference.

7. The device according to claim 6, wherein said processor is further configured to set said wait cycle to a duration of at least an interval between occurrence of packets in said data stream comprising program clock references when a change of descrambling key period is detected, and to set said wait cycle is reset to a zero value when said status indicates that said control access module is ready.

8. The device according to claim 7, wherein said processor is further configured to set said duration to a multiple of said interval between occurrences of packets in said data stream comprising program clock references.
